# EUROPÄISCHE PATENTANMELDUNG

(11) **EP 1 031 535 A1**
(43) Veröffentlichungstag der Anmeldung: **30.08.2000**
(21) Anmeldenummer: 99125181.0
(22) Anmeldetag: 17.12.1999
(51) Int. Cl.: C01B 21/06, C01B 21/082, C09C 3/00

(54) **Verfahren zur Herstellung von gelben bis roten Pigmenten auf der Basis von Nitriden und Oxidnitriden**

(30) Priorität: 23.02.1999 DE 19907618
(71) Anmelder: dmc2 Degussa Metals Catalysts Cerdec AG, 60287 Frankfurt am Main (DE)
(72) Erfinder: Jansen, Martin, Professor Dr., 71229 Leonberg (DE); Günther, Eberhard, 53859 Niederkassel (DE); Letschert, Hans-Peter, Dr., 63450 Hanau (DE)

(57) **Zusammenfassung**

Rote bis gelbe Pigmente auf Nitrid- oder Oxidnitridbasis, wie Tantal(V)-nitrid und tantalhaltige Oxidnitride, lassen sich durch Überleiten von Ammoniak über nitridierfähige Metallverbindungen, insbesondere oxidische Verbindungen, bei 700 bis 1250 °C herstellen. Erfindungsgemäß erfolgt die Nitridierung in einem Drehrohr- oder Wirbelschichtreaktor in Gegenwart eines Oxids aus der Reihe SiO₂, ZrO₂, GeO₂, SnO₂, TiO₂ und HfO₂ unter Bedingungen, unter welchen dieses Oxid im wesentlichen nicht nitridiert wird.

## Beschreibung

Die Erfindung richtet sich auf ein Verfahren zur Herstellung von roten bis gelben Pigmenten auf Nitrid- oder Oxidnitridbasis, insbesondere tantalhaltigen Nitriden und Oxidnitriden, durch Nitridierung nitridierungsfähiger Metallverbindungen mit strömendem Ammoniak bei 700 bis 1250 °C. Die Nitride und Oxidnitride werden im technischen Maßstab in Pigmentqualität erzeugt.

Farbpigmente unterliegen je nach Anwendungsart und Gebrauch der damit eingefärbten Artikel unterschiedlichen Beeinträchtigungen. Aus Artikeln, welche mit Pigmenten auf der Basis oxidischer, sulfidischer oder selenidischer Schwermetallverbindungen eingefärbt oder unter Verwendung derselben dekoriert sind, können beim Kontakt mit sauren oder alkalischen Lösungen toxikologisch bedenkliche Bestandteile freigesetzt werden, beispielsweise Nickel, Kobalt oder Chrom aus Spinellen, Cadmium aus Cadmiumsulfid-Gelb sowie Cadmium und Selen aus Cadmiumsulfoselendid-Rot beziehungsweise -Orange. Ein weiteres Problem ist die Freisetzung toxischer Schwermetalle bei der Deponierung oder Verbrennung derart eingefärbter Artikel in Müllverbrennungsanlagen.

Die aufgezeigten Probleme lassen sich mindern oder ganz beheben durch Verwendung nitridischer und oxidnitridischer Pigmente auf der Basis unbedenklicher Metalle, insbesondere tantalhaltiger Nitride und Oxidnitride. Derartige Pigmente decken insbesondere den gelben bis roten Spektralbereich ab.

Zur Einfärbung von Kunststoffen, Lacken sowie zur Herstellung einbrennfähiger Dekorfarben und Glasuren sind beispielsweise Tantal(V)-nitrid (Ta₃N₅)- siehe US-A 5,569,322 - sowie Oxidnitride in Perowskit-, Spinell-, Pyrochlor- und Elpasolitstruktur, darunter auch tantalhaltige Pigmente bekannt - siehe EP-A 0 697 373. Derartige Pigmente lassen sich durch Nitridierung geeigneter Metallverbindungen, wie Oxide, Oxidhydrate, Nitrate, Carbonate, Oxalate und Halogenide, mit Ammoniak bei 700 bis 1250 °C gewinnen. Die bisher bekannten gewordenen Nitridierungsverfahren eignen sich nicht zur Gewinnung der Nitride und Oxidnitride in technischem Maßstab, weil die Nitridierung unvollständig ist und damit der Farbton und/oder die Brillianz coloristisch unbefriedigend sind und/oder weil eine Übertragung der bisherigen Verfahren vom Labormaßstab in den technischen Maßstab, sehr aufwendige Vorrichtungen erforderlich machen würde.

Bei der bisher üblichen Nitridierung gemäß US-A 5,569,322 und EP-A 0 697 373 wird das zu nitridierende Pulver oder Pulvergemisch in Korundschiffchen in einem von außen beheizten Reaktionsrohr durch Überleiten von Ammoniak nitridiert. Durch Mitverwendung von Mineralisatoren können die Nitridierungsdauer und/oder die Temperatur zwar reduziert werden, die Mineralisatoren müssen aber für viele Anwendungsfälle wieder aus dem Nitridierungsprodukt herausgelöst werden. Auch das Verfahren gemäß EP-A 0 184 951, wonach Oxidnitride mit Perowskitstruktur durch Nitridierung nitridischer, oxidnitridischer oder oxidischer Metallverbindungen mit Ammoniak als nitridierendem und reduzierendem Agens nitridiert werden, gibt keine Anregung, wie das Laborverfahren am zweckmäßigsten in einen technischen Maßstab überführt werden kann.

Gemäß DE-A 34 43 622 läßt sich Titandioxidpulver im technischen Maßstab mittels naszierendem Stickstoff bei 800°C in schwarzes Titanoxidnitridpulver überführen. Quelle für naszierenden Stickstoff ist Ammoniak, der mit einer Geschwindigkeit von 3cm/sec durch den mit Rührflügeln ausgestatteten Turmreaktor geleitet wird. Bei dieser Reaktion wird Ti⁴⁺ zumindest teilweise in Ti³⁺ überführt - rote bis gelbe Pigmente entstehen also nicht. Tantal (V)-nitrid läßt sich gemäß US-A 2,461,020 in einem Rührreaktor herstellen: Hierbei wird eine Tantalverbindung, wie Ta₂O₅ in Gegenwart eines leicht oxidierbaren Metalls wie Magnesium, in einer Ammoniakatmosphäre umgesetzt. Das Reaktionsprodukt muß, um als Pigment verwendbar zu sein, von dem gebildeten Magnesiumoxid befreit werden.

Gemäß GB 979,277 lassen sich Nitride von Bor, Aluminium und Gallium aus den entsprechenden Phosphiden oder Arseniden mit Ammoniak bei 700 bis 1200 °C in einem Wirbelbett gewinnen. Andere Ausgangsstoffe werden nicht genannt. Aus der DE-PS 369 298 und EP 0 571 251 A1 ist bekannt, für Nitridierungen einen Drehrohrofen zu verwenden.

Aufgabe der vorliegenden Erfindung ist, ein im technischen Maßstab durchführbares Verfahren zur Herstellung gattungsgemäßer Pigmente durch Nitridierung geeigneter Metallverbindungen mit Ammoniak bei 700 bis 1250 °C aufzuzeigen. Das Verfahren sollte einfach handhabbar sein und zu homogenen Produkten führen.

Die Aufgabe wird gelöst durch das Verfahren gemäß Hauptanspruch. Gefunden wurde ein Verfahren zur Herstellung eines roten bis gelben Pigments auf der Basis eines Nitrids oder Oxidnitrids mit mindestens einem Metall einer Wertigkeitsstufe im Bereich von +3 bis +5, umfassend Nitridierung einer pulverförmigen Metallverbindung oder eines Gemischs von Metallverbindungen aus der Reihe der Oxide, Oxidhydrate, Mischoxide, Carbonate, Nitrate, Oxidnitride mit geringerem Nitridierungsgrad als ein herzustellendes Oxidnitrid, Halogenide, Oxidhalogenide und Nitridhalogenide wobei der Sauerstoff eines herzustellenden Oxidnitrids aus der/den eingesetzten Metallverbindung/en stammt, mit über die Metallverbindung/en strömendem Ammoniak bei 700 bis 1250 °C, das dadurch gekennzeichnet ist, daß man die Nitridierung in einem Drehrohr- oder Wirbelschichtreaktor in Gegenwart mindestens eines in der (den) zu nitridierenden Metallverbindung(en) gleichmäßig verteilten pulverförmigen Oxids aus der Reihe SiO₂, GeO₂, SnO₂, TiO₂, ZrO₂ und HfO₂ durchführt, wobei die gewählte Nitridierungstemperatur eine Nitridierung der genannten Oxide der vierwertigen Metalle im wesentlichen ausschließt.

Obgleich die zu nitridierende(n) Metallverbindung(en) unmittelbar in einem Drehrohr- oder Wirbelschichtreaktor nitridiert werden können, wird zweckmäßigerweise bei der Nitridierung der/den zu nitridierenden Metallverbindung/en ein Oxid aus der Reihe SiO₂, GeO₂, SnO₂, ZrO₂ und HfO₂ oder ein Gemisch solcher Oxide als Verdünnungsmittel zugesetzt; die zugesetzten Oxide sollen unter den Nitridierungsbedingungen selbst im Wesentlichen nicht nitridiert werden. Der Zusatz eines oder mehrerer der genannten Oxide, welche in einer Menge von vorzugsweise 1 bis 20 Gew.-% zugesetzt werden können, begünstigt die Nitridierung und mindert eine diese beeinträchtigende Sinterung des pulverförmigen Reaktionsgemischs. Damit werden homogene Produkte erhalten. Das erfindungsgemäße Verfahren eignet sich besonders gut zur Nitridierung eines eine Tantalverbindung enthaltenden Pulvergemischs.

Drehrohrreaktoren und Wirbelschichtreaktoren sind in der Fachwelt an sich bekannt, für die Herstellung von gelben bis roten Pigmenten auf Nitrid- oder Oxidnitridbasis wurden sie bisher aber nie in Betracht gezogen. Drehrorreaktoren, welche erfindungsgemäß bevorzugt werden, führen zu einer ständigen Freilegung von zu nitridierenden Partikeln, so daß damit homogene Produkte erhältlich sind. Pulvergemische werden zweckmäßigerweise vor der Nitridierung mittels einer Intensivmühle, etwa einer Kugelmühle homogenisiert, so daß die einzelnen Bestandteile in engen Kontakt zueinander kommen und eine Entmischung im Drehrohrreaktor vermieden wird. Auf diese Weise lassen sich auch Oxidnitride mit mindestens zwei unterschiedlichen Metallatomen aus zwei Metallverbindungen erzeugen. Vorzugsweise werden dem Drehrohrreaktor aber einheitliche Stoffe zugeführt, beispielsweise aus zwei oder mehr Metallverbindungen erzeugte sprühgetrocknete Pulver, Mischoxide oder über einen Sol-Gel-Prozeß erzeugte Xerogelpulver. Das erfindungsgemäße Verfahren führt zu einer höheren Raum-Zeit-Ausbeute als sie in bisher bekannten Verfahren bei der Herstellung gattungsgemäßer roter bis gelber Pigmente möglich war.

In Wirbelschichtreaktoren wird ein ungestörter Kontakt zwischen dem zu nitridierenden partikelförmigen Edukt und Ammoniak gewährleistet, die für Pigmentzwecke übliche Feinheit der Partikel macht aber nachgeschaltete Vorrichtungen zur Staubabscheidung und Rezyklierung des selben erforderlich. Das Edukt soll bei der Wirbelschichtnitridierung einheitlich sein, das heißt, die einzelnen Partikel enthalten, sofern Oxidnitride mit mehr als einem Metallatom erzeugt werden sollen, alle Metallatome im formgemäßen Atomverhältnis.

Die Nitridierung kann unter Verwendung von Ammoniak oder einem Ammoniak enthaltendem getrockneten Gas durchgeführt werden, vorzugsweise wird Ammoniak oder ein Ammoniak-Stickstoff-Gasgemisch mit mindestens 90 % Ammoniak eingesetzt. Während der Nitridierung wird Ammoniak oder ein Ammoniak enthaltendes Nitridierungsgas durch den Reaktor geleitet. Bei Verwendung von Ammoniak beträgt die Strömungsgeschwindigkeit mindestens 0,5 cm/sec vorzugsweise mindestens 1 cm/sec; besonders bevorzugt wird eine Strömungsgeschwindigkeit von 2 bis 3 cm/sec.

Die Nitridierungstemperatur wird der Fachmann den eingesetzten Ausgangsmetallverbindungen anpassen. Ein bevorzugter Temperaturbereich liegt bei 800 bis 1000 °C. Bei niedrigeren Temperaturen sind oft lange Reaktionszeiten erforderlich. Bei höheren Temperaturen besteht die Gefahr einer Rückspaltung des Nitrids in Metall und Stickstoff und damit einer unerwünschten Qualitätsminderung des erzeugten Nitrid- oder Oxidnitrid-Pigments.

Rote bis gelbe Pigmente auf Nitrid- oder Oxidnitridbasis weisen insbesondere eine Ta₃N₅-, Spinell-, Perowskit-, Elpasolit-, oder Pyrochlor-Struktur auf, andere Kristallformen werden aber nicht ausgeschlossen. Das Verfahren der Erfindung eignet sich insbesonders zur Herstellung von rotem Tantal(V)-nitrid sowie rot-organgen Oxidnitriden der Formel Ta₃₋ₓZrₓN₅₋ₓOₓ, worin x eine Zahl größer 0 bis zur Sättigungsgrenze des Ta₃N₅-Gitters ist. Die genannten Oxidnitride sind aus (Ta, Zr)-Xerogelen nach J.Mater.Chem. 1994, 4(8), 1293-1301 erhältlich; die Sättigungsgrenze liegt etwa bei x = 0,6.

Auch zur Herstellung von Oxidnitriden, wie sie in der EP-A 0 697 373 beschrieben sind, ist das Verfahren geeignet. Beispiele hierfür sind:
a) Farbpigmente auf der Basis von in der Perowskitstruktur vorliegenden Oxidnitriden, deren Atomverhältnis Stickstoff zu Sauerstoff für die Farbe bestimmend ist, mit den allgemeinen Formeln

   A₁₋ᵤA'ᵤ B O₂₋ᵤN₁₊ᵤ

   oder

   A'B_{1-w}B'_{w}O₁+_{w}N_{2-w}

   worin A, A', B und B' für ein oder mehrere Kationen aus der Reihe
   A: Mg²⁺, Ca²⁺, Sr²⁺, Ba²⁺
   A': Ln³⁺ (Seltenerdmetall), Bi³⁺, Al³⁺, Fe³⁺
   B: V⁵⁺, Nb⁵⁺, Ta⁵⁺,
   B': Ti⁴⁺, Zr⁴⁺, Hf⁴⁺, Sn⁴⁺, Ge⁴⁺ und
   u und w für eine Zahl im Bereich von 0 bis 1 stehen;
b)in der Pyrochlorstruktur kristallisierte Oxidnitride der allgemeinen Formeln

   Aₓ A'₂₋ₓ B₂O₅₊ₓ N₂₋ₓ

   oder

   A'₂ B_{2-y} B'_{y} O_{5+y} N_{2-y}

   worin A, A', B und B' für ein oder mehrere Kationen aus der Reihe
   A: Mg²⁺, Ca²⁺, Sr²⁺, Ba²⁺ Zn²⁺;
   A': Ln³⁺ (=Seltenerdelement), Bi³⁺, Al³⁺, Fe³⁺;
   B: V⁵⁺, Nb⁵⁺, Ta⁵⁺, Mo⁵⁺, W⁵⁺;
   B': Ti⁴⁺, Zr⁴⁺, Hf⁴⁺, Sn⁴⁺, Ge⁴⁺, Si⁴⁺, Nb⁴⁺, Ta⁴⁺ und
   x und y für eine Zahl von 0 bis 2 stehen.
c)in der Spinellstruktur kristallisierte Oxidnitride der allgemeinen Formeln

   C D₂₋ₘ D'ₘ O₄₋ₘ Nₘ

   oder

   C₁₋ₙ C'ₙ D₂ O₄₋ₙ Nₙ,

   worin C, C', D und D' für ein oder mehrere Kationen aus der Reihe
   C: Mg²⁺, Ca²⁺, Mn²⁺, Fe²⁺, Co²⁺, Ni²⁺, Zn²⁺;
   D: Al³⁺, Ga³⁺, In³⁺, Ti³⁺, V³⁺, Cr³⁺, Fe³⁺, Co³⁺, Ni³⁺;
   D': Ti⁴⁺, Zr⁴⁺, Hf⁴⁺, Sn⁴⁺, Ge⁴⁺, Si⁴⁺, Nb⁴⁺, Ta⁴⁺;
   C': Al³⁺, Ga³⁺, In³⁺, Ti³⁺, V³⁺, Cr³⁺, Fe³⁺, Co³⁺,
   für Ni³⁺ und
   m eine Zahl von größer 0 bis 2 und
   n eine Zahl von 0 bis 1 stehen;
d) in der Elpasolitstruktur kristallisierte Oxidnitride der allgemeinen Formel

   A'₂ Q B' 0_{5-z} N_{1+z} ,

   worin z für 0, 1 oder 2 steht und bei z gleich 0 Q ein
   zweiwertiges Metallion C, bei z gleich 1 Q ein
   dreiwertiges Metallion A'' und bei z = 2 Q ein
   vierwertiges Metallion D ist, entsprechend den Formeln

      A'₂ C B O₅ N

      oder

      A'₂ A"B O₄ N₂
   worin A', B, C und D die vorerwähnte Bedeutung haben und
   A'' für Ln³⁺ oder Bi³⁺ steht.

Als oxidnitridbildende Metallverbindungen eignen sich die im Hauptanspruch genannten Stoffe. Bevorzugt werden Oxide, Mischoxide, Oxidhydrate, Carbonate und Nitrate. Die im Produkt enthaltenen Metallatome werden in Form eines oder mehrerer Edukte im stöchiometrischen Atomverhältnis eingesetzt.

Gemäß einer weiteren Ausführungsform erfolgt die Nitridierung im Drehrohr in Gegenwart eines Flußmittels aus der Reihe von Amoniumsalzen der Kohlensäure, einer niederen Carbonsäure oder einer Borsäure, Borsäuren, Borsäureanhydriden, Alkalimetallhalogeniden oder Erdalkalimetallhalogeniden. Flußmittel können in einer Menge bis zu 20 Gew.-%, bevorzugt 0,5 bis 5 Gew.-% zugesetzt werden.

Je nach der gewählten Reaktionstemperatur und der Zusammensetzung des zu nitridierenden pulverförmigen Stoffgemischs, kann es im Drehrohr zu einer partiellen Sinterung kommen. Es wurde gefunden, daß die Nitridierungsdauer verkürzt und/oder die Pigmentqualität verbessert werden kann wenn die Nitridierung im Drehrohr zweistufig erfolgt; das Reaktionsprodukt der ersten Stufe wird gemahlen und dann der zweiten Drehrohrstufe zugeführt.

Das erfindungsgemäße Verfahren ist sehr einfach durchführbar. Rote bis gelbe Pigmente sind in hoher Farbqualität in technischem Maßstab zugänglich.

Die nachfolgenden Beispiele verdeutlichen das erfindungsgemäße Verfahren.

### Beispiele

### Herstellung der Pigmente:

### Beispiel 1 (B1)

300 g handelsübliches Tantal(V)-oxid (Reinheit >99,9 %, d₅₀ = 0,5 um) wurden mit 6 % Siliciumdioxid (F 500 der Firma Quarzwerke Frechen, D₅₀ = 3,4 µm) versetzt und homogenisiert. Anschließend wurde die Mischung mit Ammoniak (1300 l/h) 12 Stunden lang in einem Drehrohr (dᵢ = 14 cm, 1 = 50 cm) aus Quarzglas auf 910 °C geheizt (Umdrehungsgeschwindigkeit Drehrohr: 1 U/min.). Man erhielt ein rotes Pulver mit den in der Tabelle angegebenen Farbworten.

### Beispiel 2 (B2)

300 g handelsübliches Tantal(V)-oxid (Reinheit >99,9 %) wurden mit 4 Gew.-% gefällter Kieselsäure (Sipernat 22S der Firma Degussa) versetzt und homogenisiert. Anschließend wurde die Mischung mit Ammoniak (1300 l/h) 12 Stunden lang in einem Drehrohr aus Quarzglas auf 910 °C geheizt (Umdrehungsgeschwindigkeit Drehrohr: 1 U/min.). Man erhielt ein rotes Pulver als Produkt - siehe Tabelle.

### Beispiel 3 (B3)

300 g handelsübliches Tantal(V)-oxid (Reinheit >99,9 %) würden mit 5 Gew.-% basischem Zirkoncarbonat (Firma Kynoch Kaapstreek) und 6 Gew.-% gefällter Kieselsäure (Sipernat 22S) versetzt und homogenisiert. Anschließend wurde die Mischung mit Ammoniak (1300 l/h) 12 Stunden lang in einem Drehrohr aus Quarzglas auf 910 °C geheizt (Umdrehungsgeschwindigkeit Drehrohr: 1 U/min.). Man erhielt ein rotes Pulver als Produkt - siehe Tabelle.

### Vergleichsbeispiel 1 (VB1)

### a) Herstellung des Tantaloxidhydrats:

10 g Tantal(V)-chlorid werden in 400 ml konz. Salzsäure in der Siedhitze gelöst. Anschließend wird mit 80 ml Wasser verdünnt und Tantaloxihydrat mit konz. Ammoniaklösung bei pH 7 gefällt. Der Niederschlag wird chloridfrei gewaschen, mit Ethanol aufgeschlämmt und bei 120 °C getrocknet. Das röntgenamorphe Produkt weist einen Restwasergehlt von 14,9 Gew.-% auf (nach Glühen auf 1000°C)

### b) Nitridierung:

Anschließend wird 1 g dieses Produkts in ein Korundschiffchen gegeben und im Ammoniakstrom (9 l/h) 80 Stunden lang auf 820°C geheizt. Man erhält ein rotes Produkt - siehe Tabelle.

### Beispiel 4 (B4)

300 g Tantaloxidhydrat gemäß VB a) wurden im Drehrohr (dᵢ = 14 cm; l = 50 cm; 1 U/min) bei einem NH₃-Strom von 1300 l/h 12 Stunden bei 910 °C nitridiert. Die Farbwerte folgen aus der Tabelle; sie übertreffen jene des Vergleichsbeispiels.

### Coloristische Prüfung der erhaltenen Pulver:

Die nach den oben angegebenen Vorschriften hergestellten Pulver wurden in PVC- Plastisol eingearbeitet und coloristisch geprüft. Hierzu wurden 0,7 g der jeweiligen Probe und 2 g Plastisol vermischt und in einer Farbausreibemaschine dispergiert. Mit einem Schlitten wurden aus den Pasten Aufstriche in einer Dicke von 300 µm hergestellt. Die Gelierung erfolgte durch Erhitzen bei 140 °C innerhalb von 10 Minuten. Mit einem Spektralphometer wurden die Farbwerte L*a*b* gemessen, und in Werte des Systems (DIN 5033, Teil 3) umgerechnet. Die Farbwerte folgen aus der nachfolgenden Tabelle.

**Tabelle:**

| Versuch | L* | a* | b* |
|---|---|---|---|
| B1 | 37,61 | 36,82 | 44,67 |
| B2 | 37,88 | 42,41 | 48,30 |
| B3 | 35,04 | 41,06 | 43,50 |
| VB | 35,21 | 38,03 | 41,44 |
| B4 | 35,24 | 40,11 | 42,63 |

### Vergleichsbeispiel 2 (VB2)

Das Beispiel 1 wurde mit dem Unterschied wiederholt, daß kein Siliciumdioxid zugesetzt wurde. Die Farbwerte in PVC-Plastisol (Prüfung wie oben angegeben) lauten:
L* 37,99
a* 29,68
b* 35,78

Die Farbwerte unterscheiden sich sowohl durch den niedrigen a*-Wert als auch den niedrigen b*-Wert wesentlich vom erfindungsgemäßen Beispiel B1.

## Patentansprüche

1. Verfahren zur Herstellung eines roten bis gelben Pigments auf der Basis eines Nitrids oder Oxidnitrids mit mindestens einem Metall einer Wertigkeitsstufe im Bereich von +3 bis +5 umfassend Nitridierung einer pulverförmigen Metallverbindung oder eines Gemischs von Metallverbinungen aus der Reihe der Oxide, Oxidhydrate, Mischoxide, Carbonate, Nitrate, Oxidnitride mit geringerem Nitridierungsgrad als ein herzustellendes Oxidnitrid, Halogenide, Oxidhalogenide und Nitridhalogenide, wobei der Sauerstoff eines herzustellenden Oxidnitrids aus der (den) eingesetzten Metallverbindung(en) stammt, mit über die Metallverbindung(en) strömendem Ammoniak bei 700 bis 1250 °C,
dadurch gekennzeichnet,
daß man die Nitridierung in einem Drehrohr- oder Wirbelschichtreaktor in Gegenwart mindestens eines in der (den) zu nitridierenden Metallverbindung(en) gleichmäßig verteilten pulverförmigen Oxids aus der Reihe SiO₂, GeO₂, SnO₂, TiO₂, ZrO₂ und HfO₂ durchführt, wobei die gewählte Nitridierungstemperatur eine Nitridierung der genannten Oxide der vierwertigen Metalle im wesentlichen ausschließt.

2. Verfahren nach Anspruch 1,
dadurch gekennzeichnet,
daß man die Nitridierung in Gegenwart eines Flußmittels aus der Reihe von Amoniumsalzen der Kohlensäure, einer niederen Carbonsäure oder einer Borsäure, Borsäuren, Borsäurenanhydriden, Alkalimetallhalogeniden oder Erdalkalimetallhalogeniden durchführt.

3. Verfahren nach Anspruch 1 oder 2,
dadurch gekennzeichnet,
daß man den Ammoniak mit einer Strömungsgeschwindigkeit von mindestens 1 cm/sec. durch den Reaktor leitet.

4. Verfahren nach einem der Ansprüche 1 bis 3,
dadurch gekennzeichnet,
daß man die Nitridierung im Drehrohr zweistufig durchführt, wobei das Nitridierungsprodukt der ersten Stufe gemahlen und dann der zweiten Stufe zugeführt wird.
